# EUROPÄISCHE PATENTSCHRIFT

(11) **EP 0 882 937 B1**
(45) Veröffentlichungstag und Bekanntmachung des Hinweises auf die Patenterteilung: **15.01.2003**
(21) Anmeldenummer: 98810447.7
(22) Anmeldetag: 15.05.1998
(51) Int. Cl.: F24J 2/07, F24J 2/10

(54) **Vorrichtung zur Nutzung von Solarenergie**
Apparatus for using solar energy
Dispositif pour utiliser l'énergie solaire

(30) Priorität: 05.06.1997 CH 134997
(43) Veröffentlichungstag der Anmeldung: 09.12.1998
(73) Patentinhaber: La Vecchia, Nunzio, Dr., 6612 Ascona (CH)
(72) Erfinder: La Vecchia, Nunzio, Dr., 6612 Ascona (CH)
(74) Vertreter: Luchs, Willi

(56) Entgegenhaltungen:
- FR-A- 2 539 852
- US-A- 4 356 813
- US-A- 4 943 325

## Beschreibung

Die Erfindung bezieht sich auf eine Vorrichtung zur Nutzung von Solarenergie nach dem Oberbegriff des Anspruchs 1.

Eine dementsprechende Vorrichtung ist aus der Druckschrift US-A-4 943 325 bekannt.

Bei einem Sonnenkraftwerk gemäss der Druckschrift DE-A-32 38 797 ist eine Anzahl von Heliostaten vorgesehen, welche die auf diesen eintretende Sonnenstrahlung auf Lichtleiter und Strahlungsempfänger reflektieren. Diese Strahlungsempfänger sind dabei auf einem Tragwerk oder einem Turm montiert. Dieses Sonnenkraftwerk setzt eine grossflächige Anordnung solcher Heliostaten und der ihr zugehörigen Lichtleitern voraus und ist daher nur in Gebieten, wie bspw. in der Wüste oder im Gebirge, sinnvoll einsetzbar, bei welchen ausreichend Platz vorhanden ist.

Ausgehend von dieser bekannten Vorrichtung wurde der vorliegenden Erfindung die Aufgabe zugrundegelegt, eine Vorrichtung zu schaffen, bei welcher die Solarenergie bei geringem Platzbedarf mit einem höheren Wirkungsgrad umgesetzt werden kann und diese sich sowohl für kleine als auch für Grossanlagen eignet.

Die Aufgabe ist erfindungsgemäss durch das Kennzeichen des Anspruchs 1 gelöst.

Mit dieser erfindungsgemässen Vorrichtung kann die Solarenergie in überraschender Weise mit einem verbesserten Wirkungsgrad genutzt werden, ohne dass sie in den Herstellungskosten teuerer als bestehende Anlagen wird. Diese Vorrichtung kann überdies aufgrund ihrer Kompaktheit praktisch an jedem beliebigen Ort stationiert werden, wie zum Beispiel auf einem Dach. Sie kann auch von ihrer Grösse her je nach dem gewünschten Energiebedarf klein oder sehr gross gebaut werden.

Ausführungsbeispiele der Erfindung sowie weitere Vorteile derselben sind anhand der Zeichnung näher erläutert. Es zeigt:
- Fig. 1: eine perspektivische Seitenansicht einer prinziphaft dargestellten erfindungsgemässen Vorrichtung,
- Fig.2: eine perspektivische Ansicht des prinziphaft dargestellten Schalenkörpers der Vorrichtung nach Fig.1,
- Fig.3: ein Prinzipschaltbild eines Speicherkollektors mit einer Vorrichtung nach Fig.1,
- Fig.4: ein Blockschema einer Anlage zur Herstellung von Wasserstoff mit einer Vorrichtung nach Fig.1, und
- Fig.5: ein Blockschema einer nach dem Prinzip der Photovoltaik funktionierenden Anlage zur Erzeugung von Elektrizität mit einer Vorrichtung nach Fig.1.

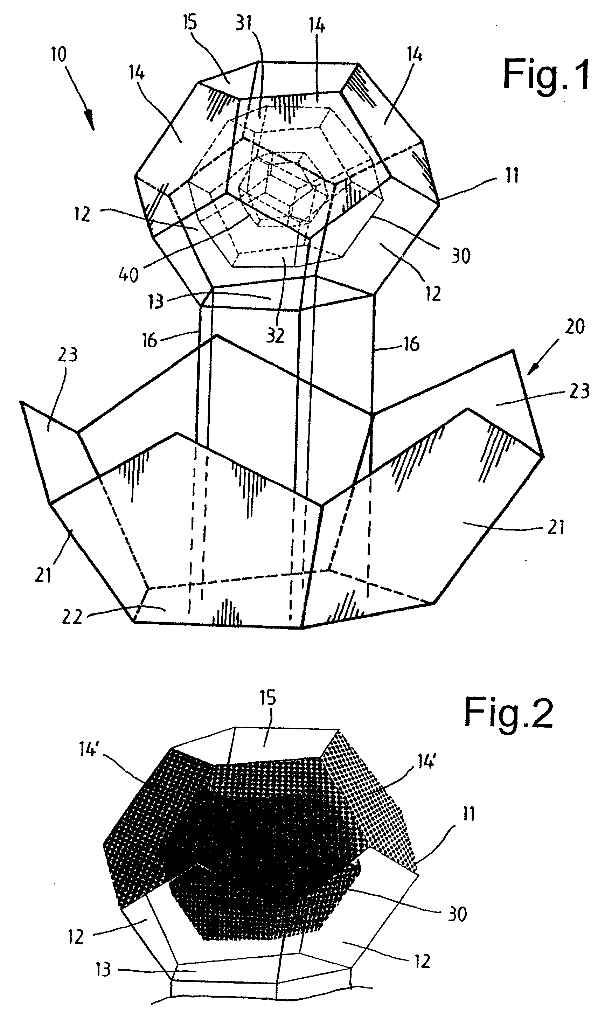

Fig. 1 zeigt eine erfindungsgemässe Vorrichtung 10 zur Nutzung von Solarenergie in schematischer Darstellung. Diese Vorrichtung 10 weist oben einen äusseren Schalenkörper 11, einen in diesem enthaltenen Hohlkörper 30 sowie einen in letzterem angeordneten Innenkörper 40 auf. Diese Körper 11, 30, 40 sind dabei jeweils aus einem gleichförmigen Vieleck gebildet und in konzentrischer Anordnung zueinander positioniert. Sie können hierbei über mehrere nicht näher veranschaulichte Verbindungsstangen oder dergleichen aneinander befestigt sein, wobei diese Verbindungsstangen vorzugsweise an zwei benachbarten Ecken fixiert sind.

Erfindungsgemäss ist dem Schalenkörper 11 mindestens eine die Sonnenstrahlen empfangende und diese spiegelnde Reflektorwanne 20 zugeordnet, wobei diese Reflektorwanne 20 dieselbe Form wie der Schalenkörper 11 in seinem unteren Teil aufweist.

Der Schalenkörper 11, der Hohlkörper 30 sowie der jeweilige in diesem angeordnete Innenkörper 40 sind in einer sehr vorteilhaften Ausführung als Dodekaeder ausgebildet, welche aus zwölf regelmässigen Fünfecken ausgestaltet sind. Die Reflektorwanne 20 ihrerseits ist ebenfalls aus einem teilweisen Dodekaeder mit regelmässigen fünfeckigen Seitenwänden 21 bzw. einer Bodenfläche 22 zusammengesetzt. Der Schalenkörper 11 ist beispielsweise über angedeutete Stützbeine 16 oberhalb der Wanne 20 aufgestellt. Die untere fünfeckige Fläche 13 des Schalenkörpers 11 als auch die Bodenfläche 22 der Wanne 20 sind annähernd horizontal und zentrisch zueinander angeordnet. Dieser Schalenkörper 11 kann dabei konzentrisch zu dem von der Wanne teilweise gebildeten Dodekaeder oder auch oberhalb dieses Zentrums aufgestellt sein, jedoch vorzugsweise auf der Mittelachse der Wanne. Die von den Fünfecken gebildeten Flächen der Körper 11, 30, 40 wie auch diejenigen der Reflektorwanne 20 sind in paralleler Anordnung zueinander ausgerichtet, um eine optimale Spiegelung der von diesen Körpern reflektierten Strahlen zu erhalten. So sind die Seitenflächen 21 der Wanne parallel zu den Fünfecken 12 und dieselben wiederum parallel zu den entsprechenden Flächen des Hohlkörpers 30 bzw. des Innenkörpers 40 angeordnet.

Die Fünfecke 12 als auch das untere horizontale Fünfeck 13, welche die untere Hälfte des Schalenkörpers 11 bilden, sind vorteilhaft als Öffnungen ausgebildet, so dass die von der auf der Innenseite mit Spiegelflächen 23 versehene Wanne 21 reflektierten Strahlen durch diese Öffnungen der Fünfecke 12 und 13 ins Innere des Schalenkörpers 11 gelangen. Bei dem in letzterem angeordneten Hohlkörper 30 sind das obere und das untere horizontale Fünfeck 31, 32 als Öffnungen gestaltet. Die Strahlen können demnach oben direkt von aussen als Sonnenlicht und unten als reflektierte Strahlen ins Innere dieses Hohlkörpers 30 eintreten, welcher vorteilhaft auf der Aussen- wie auch auf der Innenseite mit Spiegeln belegt ist. Der Innenkörper 40 oder der Kern ist seinesgleichen voll geschlossen und er ist derart ausgebildet, dass er die empfangenen Strahlen je nach der nachfolgend erläuterten Anwendung entweder durch Ausbildung als Spiegel reflektiert oder aber dieselben absorbiert.

Gemäss Fig.2 kann der Schalenkörper 11 und der Hohlkörper 30 jeweils auf der Aussen- und/oder Innenseite an den Flächen der Fünfecke 14' mit an sich handelsüblichen Solarzellen ausgestattet sein, mittels welchen eine direkte Umsetzung der Solarenergie in elektrische Energie erfolgt. Der Schalenkörper 11 ist hierbei wiederum mit den Öffnungen bei den Fünfecken 12, 13, 15 veranschaulicht.

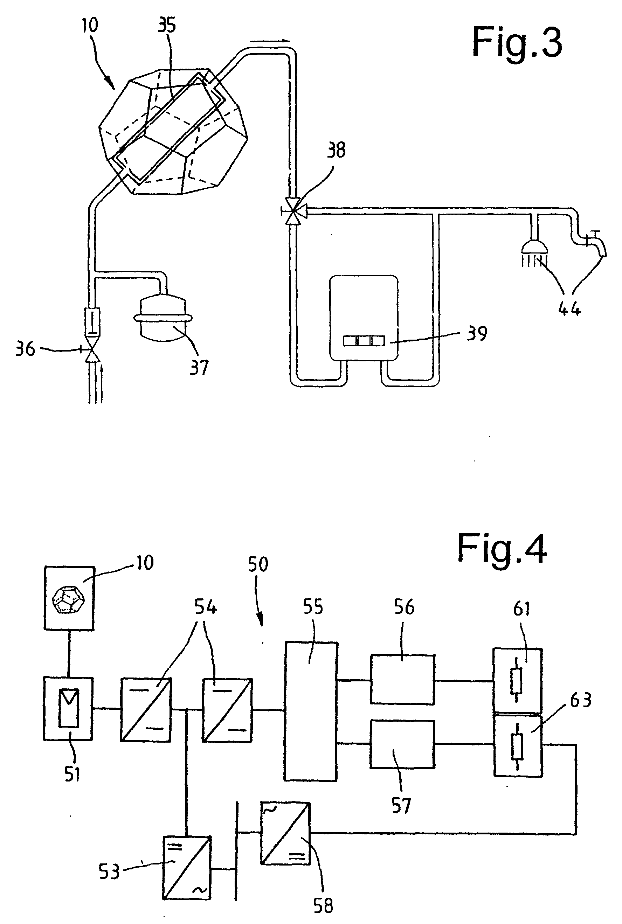

Gemäss Fig.3 sind als erfindungsgemässe Mittel für die Entnahme der im Schalenkörper 11 bzw. im Hohlkörper 30 konzentrierten Solarenergie schematisch dargestellte wärmeleitende Durchlaufrohre 35 vorgesehen. Ein Medium, vorzugsweise Wasser, wird mittels einer Pumpe durch Öffnen eines Ventils 36 durch die bspw. auf einem Hausdach montierte Vorrichtung 10 und von dieser an einen Verbraucher weitergeleitet. Das nach den Durchlaufrohren 35 erhitzte Wasser kann von einem Umschaltventil 38 im Winterbetrieb an eine Heizung 39 und im Sommer für die Warmwasserversorgung 44 von Haushalten oder dergleichen verwendet werden. Ferner ist noch ein Auffangbehälter 37 angedeutet, welcher zum Druckausgleich vorgesehen ist.

Die Durchlaufrohre 35 können schlangen-, schrauben-, spiral- oder andersförmig durch die Körper 11, 30 geleitet werden. In dem vorliegenden Ausführungsbeispiel ist mit Vorteil der Schalenkörper 11 an seinen Innenflächen 14, der Hohlkörper 30 innen und aussen und der Innenkörper 40 an all seinen zwölf Aussenflächen mit Spiegelreflektoren bestückt, indessen die Durchlaufrohre 35 mit einem diese Strahlen in Wärmeenergie umwandelnden Material, zum Beispiel eine spezielle Eisenlegierung oder ein Kunststoffrohr, versehen sind, um eine maximale Energienutzung zu erzielen.

Fig.4 zeigt eine weitere Verwendungsmöglichkeit der durch die Vorrichtung 10 erzeugten Energie, bei der mittels einer schematisch verdeutlichten Anlage 50 Wasserstoff in an sich herkömmlicher Weise erzeugt werden kann. Die Mittel für die Entnahme der Solarenergie aus der Vorrichtung 10 können hierbei ähnlich wie in Fig.3 mittels nicht näher gezeigten Durchlaufrohren ausgeführt sein, wobei zum Antrieb des Generators 51 eine Gasturbine vorgesehen sein kann, welche mit dem in den Durchlaufrohren erhitzten Gas angetrieben wird. Eine solche Anlage 50 kann auch als Kraftwerk ausgebildet sein, bei dem die Vorrichtung mit einer Höhe bis zu zehn Metern oder noch höher gebaut ist.

Bei der Anlage 50 wird durch eine Elektrolyse oder dergleichen in einem Behälter 55 Wasserstoff und Sauerstoff erzeugt. Dazu ist eine mit dem Generator 51 verbundene Gleichstromschiene 54 vorgesehen. Dem Behälter 55 sind Speicher 56, 57 für die separierte Aufnahme des Wasser- bzw. Sauerstoffes. Ausserdem kann die mit der Elektrolyse entstandene Wärmeenergie und die elektrische Restenergie mittels den angedeuteten Verbrauchern 61, 63 genutzt werden. Diese Wasserstofferzeugung kann beispielsweise im Gemisch als Antriebsmittel für Fahrzeuge eingesetzt werden.

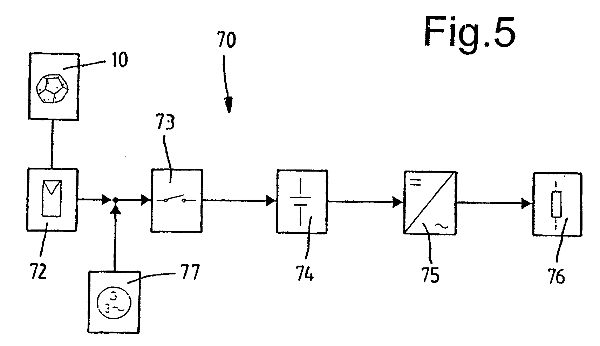

Fig.5 zeigt eine weitere Ausführung zur Ausnützung der in der Vorrichtung 10 gewonnenen Solarenergie. Die schematisch gezeigte Anlage 70 ist ebenso in an sich bekanntem Aufbau als Photovoltaikanlage vorgesehen, bei welcher die von der Vorrichtung 10 in der Art gemäss Fig.4 erzeugte mechanische Energie via einen Generator 72 oder aber in der in Fig.2 verdeutlichten Weise, bei welcher der vom Sonnenlicht direkt erzeugte elektrische Strom über einen Laderegler 73 in eine Batterie 74 eingespiesen wird. Ausgehend von dieser Batterie 74 kann ein Verbraucher 76 direkt oder unter Zwischenschaltung eines Wechselrichters 75 angeschlossen werden.

Die Erfindung ist mit den oben erläuterten Ausführungsbeispielen ausreichend dargetan. Die Ausbildung der Körper in der Form eines Dodekaeders hat in der Praxis gezeigt, dass mit diesen der höchste Wirkungsgrad erzielt wird. Im Prinzip könnten diese Körper mit einem Vieleck gestaltet sein, welches aus sechs- oder mehreckigen Flächen zusammengesetzt ist.

Die Reflektorwanne 20 ist in der Darstellung gemäss Fig. 1 mit ihrer Bodenfläche 22 annähernd horizontal ausgerichtet. Je nach Ort und Breitengrad kann diese auch in einem Winkel zwischen 10° und 30° zur Horizontalen angeordnet sein. Der Schalenkörper 11 wäre dann wie in Fig.1 auf der senkrechten Mittelachse dieser Wanne positioniert.

Des weiteren könnte im Schalenkörper mehr als ein Hohlkörper 30 vorgesehen sein, d.h. es könnte ein weiterer zwischen diesem und dem Innenkörper 40 mit einem entsprechenden Abstand befestigt sein.

## Patentansprüche

1. Vorrichtung zur Nutzung von Solarenergie, mit einem äusseren Schalenkörper (11) und mindestens einem in diesem enthaltenen Innenkörper (40), welche aus einem gleichförmigen Vieleck gebildet sind, wobei der Schalenkörper (11) mindestens eine Öffnung (12, 13, 15) für den Einlass von Sonnenstrahlen aufweist, wobei
der Schalenkörper (11) oberhalb einer gegen die Sonne ausgerichteten Reflektorwanne (20) angeordnet ist, und wobei Mittel vorhanden sind, welche die im Schalenkörper (11) konzentrierte Solarenergie umsetzen und an einen Verbraucher weiterleiten, **dadurch gekennzeichnet, dass** diese Reflektorwanne aus demselben Vieleck wie der Schalenkörper (11) und der in diesem enthaltenen Innenkörper (40) gebildet ist.

2. Vorrichtung nach Anspruch 1, **dadurch gekennzeichnet, dass** zwischen dem Schalenkörper (11) und dem Innenkörper (40) mindestens ein weiterer Hohlkörper (30) angeordnet ist, wobei dieser Hohlkörper (30) konzentrisch und beabstandet zu den Körpern (11, 40) und mit demselben Vieleck wie diese Körper ausgebildet ist.

3. Vorrichtung nach Anspruch 2, **dadurch gekennzeichnet, dass** der Schalenkörper (11), der Hohlkörper (30) sowie der jeweilige in diesem angeordnete Innenkörper (40) aus einem aus zwölf regelmässigen Fünfecken bestehenden Dodekaeder als Vieleck, indessen die Reflektorwanne ebenfalls aus einem teilweisen Dodekaeder mit regelmässigen Fünfecken gebildet ist.

4. Vorrichtung nach Anspruch 3, **dadurch gekennzeichnet, dass** die von den Fünfecken gebildeten Flächen dieser Körper (11, 30, 40) wie auch diejenigen der Reflektorwanne (20) in annähernd paralleler Anordnung zueinander ausgerichtet sind.

5. Vorrichtung nach einem der Ansprüche 2 bis 4, **dadurch gekennzeichnet, dass** der Schalenkörper (11) auf seiner Innenseite, der Hohlkörper (30) innen und aussen und der Innenkörper (40) auf seiner Aussenfläche mit Spiegeln bestückt sind.

6. Vorrichtung nach einem der vorhergehenden Ansprüche 2 bis 4, **dadurch gekennzeichnet, dass** der Innenkörper (40) an der Aussenoberfläche bzw. der Schalenkörper (11) zumindest an dessen Aussenflächen (14) mit Solarzellen versehen sind, indessen der Schalenkörper (11) an seiner Innenfläche und der Hohlkörper (30) innen und aussen mit Spiegeln versehen sind.

7. Vorrichtung nach einem der vorhergehenden Ansprüche, **dadurch gekennzeichnet, dass** die Reflektorwanne (20) eine Bodenfläche (22) und fünf Seitenwände (21) aufweist, wobei die Bodenfläche (22) parallel und zentrisch zu einer unteren fünfeckigen Fläche (13) des Schalenkörpers (11) angeordnet ist.

8. Vorrichtung nach einem der vorhergehenden Ansprüche, **dadurch gekennzeichnet, dass** die Mittel für die Umsetzung der in dem Schalenkörper (11) konzentrierten Solarenergie als wärmeleitende Durchlaufrohre (35) in dem Schalenkörper (11) ausgebildet sind, durch welche ein Medium, vorzugsweise Wasser oder Gas, geleitet wird.

## Claims

1. Apparatus for utilising solar energy, with an outer shell body (11) and at least one inner body (40) comprised in it, which are formed from an uniform polygon, wherein the shell body (11) comprises at least one opening (12, 13, 15) for the entrance of solar rays, wherein the shell body (11) is disposed above a reflector pan (20) oriented toward the sun and whereby means are available which convert the solar energy concentrated in the shell body (11) and conduct it further to a consumer, **characterized in that**
this reflector pan is formed of the same polygon as the shell body (11) and the inner body (40) comprised in it.

2. Apparatus as claimed in claim 1, **characterized in that** between the shell body (11) and the inner body (40) at least one further hollow body (30) is disposed, with this hollow body (30) being implemented concentrically and spaced apart from the bodies (11, 40) and formed with the same polygon as these bodies.

3. Apparatus as claimed in claim 2, **characterized in that** the shell body (11), the hollow body (30) as well as the particular inner body (40) disposed in it, is formed from a dodecahedron as polygon comprising twelve regular pentagons, whereas the reflector pan is also formed of a partial dodecahedron with regular pentagons.

4. Apparatus as claimed in claim 3, **characterized in that** the faces, formed of the pentagons, of these bodies (11, 30, 40) as well as also those of the reflector pan (20), are oriented in approximately parallel arrangement with respect to each other.

5. Apparatus as claimed in one of claims 2 to 4, **characterized in that** the shell body (11) on ist inside, the hollow body (30) inside and outside, and the inner body (40) on its outer faces are equipped with mirrors.

6. Apparatus as claimed in one of claims 2 to 4, **characterized in that** the inner body (40) on the outer surface, respectively the shell body (11) at least on ist outer faces (14), are provided with solar cells, whereas the shell body (11) on ist inner face and the hollow body (30) inside and outside are provided with mirrors.

7. Apparatus as claimed in one of preceding claims, **characterized in that** the reflector pan (20) comprises one bottom face (22) and five side walls (21), with the bottom face (22) being disposed parallel and centrally to a lower pentagonal face (13) of the shell body (11).

8. Apparatus as claimed in one of preceding claims, **characterized in that** the means for the conversion of the solar energy concentrated in the shell body (11) are implemented as heat-conducting throughput pipes (35) in the shell body (11), through which a medium, preferably water or gas, is conducted.

## Revendications

1. Dispositif pour utiliser l'énergie solaire, comportant un corps en forme de coque (11) et au moins un corps intérieur (40), qui est contenu dans ce corps en forme de coque, ces corps étant formés par un polygone uniforme, dans lequel le corps en forme de coque (11) comporte au moins une ouverture (12, 13, 15) pour l'entrée de rayons du soleil, et dans lequel le corps en forme de coque (11) est disposé au-dessus d'une cuvette formant réflecteur (20) orientée vers le soleil, et dans lequel il est prévu des moyens qui convertissent l'énergie solaire concentrée dans le corps en forme de coque (11) et la transmettent à un appareil d'utilisation, **caractérisé en ce que** cette cuvette formant réflecteur est formée par le même polygone que le corps en forme de coque (11) et que le corps intérieur (40) contenu dans ce corps en forme de coque.

2. Dispositif selon la revendication 1, **caractérisé en ce que**, entre le corps en forme de coque (11) et le corps intérieur (40), est disposé au moins un autre corps creux (30) de façon concentrique et à distance des corps (11, 40), ce corps creux étant réalisé avec le même polygone que ces corps.

3. Dispositif selon la revendication 2, **caractérisé en ce que** le corps en forme de coque (11), le corps creux (30) ainsi que le corps intérieur (40) disposé dans ce corps creux, sont formés chacun par un dodécaèdre constitué de douze pentagones réguliers, en tant que polygone, tandis que la cuvette formant réflecteur est également formée par un dodécaèdre partiel comportant des pentagones réguliers.

4. Dispositif selon la revendication 3, **caractérisé en ce que** les surfaces, formées par les pentagones, de ces corps (11, 30, 40) ainsi que celles de la cuvette formant réflecteur (20) sont orientées en étant au moins approximativement parallèles entre elles.

5. Dispositif selon l'une des revendications 2 à 4, **caractérisé en ce que** le corps en forme de coque (11) est équipé de miroirs sur sa face intérieure, **en ce que** le corps creux (30) est équipé de miroirs intérieurement et extérieurement, et **en ce que** le corps intérieur (40) est équipé de miroirs sur sa surface extérieure.

6. Dispositif selon l'une des revendications 2 à 4, **caractérisé en ce que** le corps intérieur (40) est équipé de piles solaires sur sa surface extérieure, et **en ce que** le corps en forme de coque (11) est équipée de piles solaires au moins sur ses surfaces extérieures (14), tandis que le corps en forme de coque (11) est pourvu de miroirs au niveau de sa face intérieure et que le corps creux (30) est équipé de miroirs intérieurement et extérieurement.

7. Dispositif selon l'une des revendications précédentes, **caractérisé en ce que** la cuvette formant réflecteur (20) comporte une surface de fond (22) et cinq parois latérales (21), la surface de fond (22) étant disposée parallèlement et d'une manière centrée par rapport à une surface inférieure pentagonale (13) du corps en forme de coque (11).

8. Dispositif selon l'une des revendications précédentes, **caractérisé en ce que** les moyens de conversion de l'énergie solaire concentrée dans le corps en forme de coque (11), sont agencés sous la forme de tubes thermoconducteurs à circulation (35) situés dans le corps en forme de coque (11), dans lesquels un milieu, de préférence de l'eau ou un gaz, est guidé.
